# EUROPEAN PATENT APPLICATION

(11) **EP 3 343 513 A1**
(43) Date of publication of application: **04.07.2018**
(21) Application number: 16306859.6
(22) Date of filing: 30.12.2016
(51) Int. Cl.: G06T 13/20, G06T 19/00

(54) **DEVICE AND METHOD FOR GENERATING FLEXIBLE DYNAMIC VIRTUAL CONTENTS IN MIXED REALITY**

(71) Applicant: Thomson Licensing, 92130 Issy-les-Moulineaux (FR)
(72) Inventor: Jouet, Pierrick, 35576 Cesson Sévigné (FR); Baillard, Caroline, 35576 Cesson Sévigné (FR); Luo, Tao, 35576 Cesson Sévigné (FR)
(74) Representative: Huchet, Anne

(57) **Abstract**

Dynamic virtual content(s) to be superimposed to a representation of a real 3D scene complies with a scenario scheme defined before runtime. Real-world information (22) is captured in the real 3D scene and the scenario scheme is executed at runtime in function of that real-world information. Two or more animations associated with the scenario scheme and having respective animation levels are defined before the runtime. One of them is selected (13) in function of at least one parameter extracted from the real-world information and corresponding to the animation level of the selected animation, and is executed (14) at the runtime as the scenario scheme.
Application to mixed reality.

## Description

### 1. Technical field

The invention relates to the domain of Mixed Reality (MR), in which a computer-generated (CG) content is not just overlaid on the top of a view of the real world, but really interacts with the real-world environment, so that digital and physical realities seamlessly blend together.

### 2. Background art

Augmented Reality (AR) applications refer to a live view of a real-world environment whose elements are augmented by CG content, such as video or graphics. In MR, the CG content further interacts with the real-world environment, and digital and physical realities seamlessly blend together.

The CG content can be animated, in which case the terms "CG effects" are used about a concerned animation. Such an animation can be predefined (case of a controlled trajectory) or computed at the runtime (animation powered by a physical engine).

In AR/MR applications, the visual CG content is inserted in the real-world view at a given position. This position is generally either defined relatively to a predefined visual 2D/3D pattern (for e.g. industrial applications), predetermined by spatial coordinates (e.g. outdoor location-based applications) or screen coordinates (e.g. Google Glass applications), or manually chosen by a user (e.g. interactive applications, like those proposed with Microsoft HoloLens^{™}). The CG content has a scale that can itself be predetermined or defined with respect to the size of a visual pattern.

However, in applications taking place in uncontrolled complex environments, the optimal location and scale depends on the real-world environment and cannot be fully specified in advance. For instance, for inserting virtual objects in a user's living room with an MR application, it is necessary to understand and analyze the layout of the real scene, but also its radiometry, the geometry and appearance of the virtual objects, the user position and the purpose of the MR application itself. As a matter of fact, an optimal placement would depend on complementary rules and constraints referring at the same time to the CG content, the real-world environment and the application.

More particularly, in the case of CG effects, it is necessary to compute the placement occupied during the animation, typically through a trajectory, in order to determine a required available real-world volume.

Known solutions for addressing the above consists in using feature detection or object recognition techniques to specify relevant locations for insertion. Existing methods are thus directed to determining an optimal placement and scaling of a virtual scene to be inserted in a real-world environment in MR, taking simultaneously into account several complementary criteria.

However, those solutions only deal with geometrical parameters of the CG content. Where the latter is an animated scene, situations arise where the adaptation of geometrical parameters is not sufficient to allow satisfying CG effects. Depending on the environmental context (user position, available space in the real scene...), the animation parameters may be inappropriate.

Endeavoring to overcome those limitations by additional computation and storage may require substantially increased resources, up to quite costly or merely impracticable implementations.

### 3. Summary

A purpose of the present disclosure is to enable advantageously a flexible adaptation of MR scenarios to a large range of real situations, without requiring significantly additional storage or computing resources.

More precisely, the disclosure is suited to scenarios involving the rendering of desired CG effects. In this respect, a scenario is defined as a principle description of a CG content animation, predesigned by a creator. An animation constitutes an effective specific implementation of a scenario, so that one scenario can correspond to multiple distinct animations, differing in particular by their degrees of actions and of representations.

In this respect, an object of the present disclosure is notably a device for generating at least one dynamic virtual content to be superimposed to a representation of a real 3D scene. The dynamic virtual content(s) complies / comply with at least one scenario scheme defined before a runtime of the scenario scheme(s). The device comprises:
- at least one input adapted to receive real-world information captured in the real 3D scene and
- at least one processor configured for executing the scenario scheme(s) at the runtime in function of the real-world information.

According to the present disclosure, the device is adapted to obtain at least two animations defined before the runtime of the scenario scheme(s), the animations being associated with at least one of the scenario scheme(s) and having at least two respective animation levels. The at least one processor is further configured:
- for selecting one of the animations in function of at least one parameter extracted from the real-world information and corresponding to the animation level of the selected animation and
- for executing the selected animation at the runtime as the one of the scenario scheme(s).

A scenario scheme is defined as a set of CG effects common to at least two different animations. Such a scenario scheme is preferably compliant with semantic rules. For example, it can state "A horse runs for some time on a table and suddenly rears", which leaves several animation possibilities notably related to the length of the run on the table and the direction of the rearing horse. It can be noted that a scenario scheme usually covers several distinct possible scenarios, each of which corresponds to multiple animations.

In the present disclosure, a scenario scheme covers two or more predefined animations, one of which is selected in executing the scenario scheme at runtime. In addition, those animations have respective animation levels, which amounts to considering a hierarchical ranking thereof, based on animation - and not merely e.g. on a degree of representation accuracy, as could be done in static MR representations. It should further be noted that two or more of those animations may have a same animation level, and be therefore possibly selected on the ground of additional criteria.

By contrast, two different levels of animation correspond necessarily to two different animations, based on the above definitions.

The animation levels are representative of required resources. Such resources can correspond to needed properties in the real world, such as e.g. available volume space or height of real objects. They can alternatively or in combination correspond to needed computation or storage resources.

By contrast with existing or predictable solutions, the adaptation of the scenario scheme is predesigned and ready to execution when the real 3D scene is known, including possibly in real-time. Also, the selection of the appropriate animation is commensurate with a reachable animation level, given the effective specificities of the real 3D scene.

In fact, the selection of an appropriate animation can be carried out with a mere trigger.

The disclosed device can allow, in preferred embodiments, significant flexibility and efficiency while preserving computing and storage resources. It can further enable to preserve the semantics of a virtual scene - a virtual scene being defined as a set of inter-dependent CG objects associated or not with CG effects.

The device is also adapted to the possible presence of two or more independent or interacting virtual scenes in a given MR application. In this respect, two or more scenario schemes can be defined, each of which can be associated with two or more animations.

In what follows, the terms "intensity of CG effects" are also used for meaning the animation level.

In an embodiment, the selection of the animation is carried out at a preliminary adjustment stage, before any scenario runtime.

In another embodiment, the selection of the animation is carried out during the runtime of a former scenario, and anticipates one or more following scenario. In this respect, different successive parts of a given scenario scheme comprising two or more scenes may possibly be considered as distinct scenario schemes, insofar as each of those successive parts can be associated with specific real-world constraints and a particular animation level.

In an advantageous embodiment, the selection of the animation is carried out at the runtime of the scenario scheme, preferably in real-time. Preferably, further to a change in the real 3D scene during the runtime of the scenario scheme (e.g. a real object is removed or added in the environment), the selection of the animation is then updated.

It can be noted that MR scenarios may have been designed upstream without any precise knowledge of the environment, or for a large variety of different environments - e.g. for a TV set and a table on which the TV is positioned, without more precision. The adaptation is then advantageously effected locally at the run place, so as to make those scenarios operational.

A representation of the real 3D scene means any kind of representation to a user, which may be in particular through transparent or translucent glasses (direct view), or by the intermediary of a camera capturing images of the real 3D scene, those images being visualized by a user on a screen (indirect view). Those techniques will not be developed here, as well known to persons having ordinary skills in the art.

The real-world information captured in the real 3D scene comprises advantageously a point cloud or 3D model, obtained from scanning the environment. Also, the at least one processor is advantageously configured for determining environment specificities, such as notably identifying objects present in the real 3D scene together with part or all of their types, positions, sizes and shapes, as well as free planar areas. It is also advantageously configured for analyzing MR application requirements (the real-world constraints, which can concern notably elements or free planar areas) and checking if the environment fulfills those requirements, even partially.

The "execution" of the scenario scheme(s) and of the selected animation(s) is to be understood as possibly encompassing the mere providing of the generated virtual contents with a view to an MR representation. Namely, the device does not necessarily comprise the exploited visualization capacities, and can instead be adapted to provide the appropriate information to another device for visualization, via wired or wireless transmissions (advantageously through streaming).

Anyway, in advantageous embodiments, the virtual content generation and the visualization functions are integrated in a same apparatus, preferably mobile.

In an implementation of the device, an unsuited configuration of the environment with respect to one of the scenario schemes (which can be reflected notably in the extracted parameter(s)) leads to not executing that scenario scheme at all.

In particular implementations, the scenario scheme(s) include(s) a movement of a virtual object along a trajectory, and the associated animations include at least one of respectively distinct path angles of that trajectory and respectively distinct lengths of that trajectory.

In other implementations, the scenario scheme(s) include(s) a kind of behavior of at least one virtual object and the associated animations include respectively distinct achievements of that kind of behavior.

In still other implementations, the scenario scheme(s) include(s) at least one of a generation, a transformation, and a movement of at least two virtual objects, and the associated animations include respectively distinct numbers of those virtual objects.

The intensity of the CG effects (animation level) can be defined by any of the above parameters, whether taken separately or combined in any possible way. That intensity of the CG effects is advantageously considered together with representation levels, which can include granularity and/or scale, such as e.g. the levels of refinement of an object part.

Preferably, the at least one parameter extracted from the real-world information includes data about available space in the real 3D scene.

Accordingly, the CG effects can be suited to the available space.

In an advantageous implementation, then, the data about available space in the real 3D scene include data on at least one candidate insertion area predetermined before the runtime of the scenario scheme.

According to a particular embodiment, the data about available space in the real 3D scene include data on at least two candidate insertion areas predetermined before the runtime of the scenario scheme. This makes possible a flexible and quick adaptation to available spaces in the real environment, while taking into account a user's position, real events and/or potentially interfering virtual contents. Details on related implementations for automatically selecting a suited candidate insertion area are given in copending European patent application EP-16306684.8 to Thomson Licensing, filed on 15 December 2016 (inventors: C. Baillard, P. Jouet, M. Fradet).

In another implementation (which can be combined with the previous one), the scenario scheme(s) involving a representation of at least one virtual object in the representation of the real 3D scene, the at least one parameter extracted from the real-world information includes data about a relationship of the virtual object(s) with a user.

That relationship includes advantageously at least one of a distance of the virtual object(s) to the user and a visibility of the virtual object(s) to the user.

In this way, the final rendering can be adapted to the user position and possibly the related visibility with respect to the virtual scene.

In still another implementation (which can be combined with the previous ones), the scenario scheme(s) involving a representation of at least one virtual object in the representation of the real 3D scene, the at least one parameter extracted from the real-world information includes data about a relationship of the virtual object(s) with the real 3D scene.

That relationship includes advantageously at least one of a position of the virtual object(s) with respect to a field of view of a display, a represented distance of the virtual object(s) to at least one real object, and an importance of the virtual object(s) with respect to the real 3D scene.

According to a preferred embodiment, the device being adapted to generate at least two of the dynamic virtual contents complying respectively with at least two of the scenario schemes, and the dynamic virtual contents being ranked in an order of importance before the runtime of the scenario schemes, the at least one processor is configured for selecting the animations associated respectively with the scenario schemes in function of that order of importance.

Advantageously, then, if the dynamic virtual contents cannot be generated jointly, at least one of the virtual contents being ranked at a lower order of importance than at least one other of the virtual contents is not generated.

Another object of the disclosure is a device for generating at least one dynamic virtual content to be superimposed to a representation of a real 3D scene, the dynamic virtual content(s) complying with at least one scenario scheme defined before a runtime of the scenario scheme(s). The device comprises:
- means for receiving real-world information captured in the real 3D scene and
- means for executing the scenario scheme(s) at the runtime in function of the real-world information.

According to the disclosure, the device further comprises:
- means for obtaining at least two animations defined before the runtime of the scenario scheme(s), those animations being associated with one of the scenario scheme(s) and having at least two respective animation levels,
- means for selecting one of the animations in function of at least one parameter extracted from the real-world information and corresponding to the animation level of the selected animation and
- means for executing the selected animation at the runtime as the one of the scenario scheme(s).

The disclosure further pertains to an apparatus chosen among a mobile phone, a tablet and an augmented reality or mixed reality head-mounted display, that apparatus comprising a device according to the disclosure.

The disclosure also relates to a method for generating at least one dynamic virtual content to be superimposed to a representation of a real 3D scene, the dynamic virtual content(s) complying with at least one scenario scheme defined before a runtime of the scenario scheme(s). The method comprises:
- receiving real-world information captured in the real 3D scene and
- executing the scenario scheme(s) at the runtime in function of the real-world information.

According to the disclosure, the method further comprises:
- obtaining at least two animations defined before the runtime of the scenario scheme(s), those animations being associated with one of the scenario scheme(s) and having at least two respective animation levels,
- selecting one of those animations in function of at least one parameter extracted from the real-world information and corresponding to the animation level of the selected animation and
- executing the selected animation at the runtime as the one of the scenario scheme(s).

That method is advantageously executed by a device according to any of the implementation modes of the disclosure.

In addition, the disclosure relates to a computer program for generating at least one dynamic virtual content, comprising software code adapted to perform a method compliant with any of the above execution modes when the program is executed by a processor.

The present disclosure further pertains to a non-transitory program storage device, readable by a computer, tangibly embodying a program of instructions executable by the computer to perform a method for generating at least one dynamic virtual content compliant with the present disclosure.

Such a non-transitory program storage device can be, without limitation, an electronic, magnetic, optical, electromagnetic, infrared, or semiconductor device, or any suitable combination of the foregoing. It is to be appreciated that the following, while providing more specific examples, is merely an illustrative and not exhaustive listing as readily appreciated by one of ordinary skill in the art: a portable computer diskette, a hard disk, a ROM (read-only memory), an EPROM (Erasable Programmable ROM) or a Flash memory, a portable CD-ROM (Compact-Disc ROM).

### 4. List of figures

The present disclosure will be better understood, and other specific features and advantages will emerge upon reading the following description of particular and non-restrictive illustrative embodiments, the description making reference to the annexed drawings wherein:
- figure 1 is a block diagram representing schematically a device for generating dynamic virtual contents, compliant with the present disclosure;
- figure 2 illustrates ranked intensities of effects of animations corresponding to a scenario scheme exploited with the device of figure 1;
- figure 3 represents a mechanism of animation selection with the device of figure 1;
- figure 4 is a photo showing a first example of application of the device of figure 1, implemented in a tablet;
- figures 5A and 5B consist respectively of two photos showing a second example of application of the device of figure 1, implemented in a tablet;
- figure 6 is a flow chart showing successive mixed reality steps executed with the device of figure 1;
- figure 7 diagrammatically shows a virtual content generation apparatus comprising the device represented on figure 1, coupled with an MR visualization apparatus.

### 5. Detailed description of embodiments

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, and the like represent various processes which may be substantially represented in computer readable media and so executed by a computer or processor, whether or not such computer or processor is explicitly shown.

The terms "adapted" and "configured" are used in the present disclosure as broadly encompassing initial configuration, later adaptation or complementation of the present device, or any combination thereof alike, whether effected through material or software means (including firmware).

The functions of the various elements shown in the figures may be provided through the use of dedicated hardware as well as hardware capable of executing software in association with appropriate software. When provided by a processor, the functions may be provided by a single dedicated processor, a single shared processor, or a plurality of individual processors, some of which may be shared. Moreover, explicit use of the term "processor" should not be construed to refer exclusively to hardware capable of executing software, and refers in a general way to a processing device, which can for example include a computer, a microprocessor, an integrated circuit, or a programmable logic device (PLD). Additionally, the instructions and/or data enabling to perform associated and/or resulting functionalities may be stored on any processor-readable medium such as, e.g., an integrated circuit, a hard disk, a CD (Compact Disc), an optical disc such as a DVD (Digital Versatile Disc), a RAM (Random-Access Memory) or a ROM memory. Instructions may be notably stored in hardware, software, firmware or in any combination thereof.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

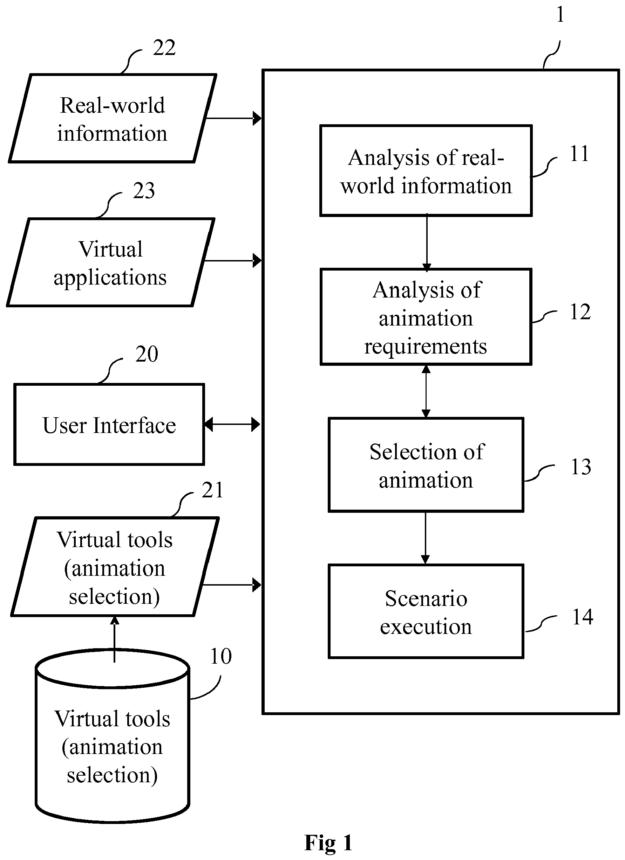

The present disclosure will be described in reference to a particular functional embodiment of device 1 for generating dynamic virtual contents, as illustrated on **Figure 1**.

The device 1 is adapted to generate at least one dynamic virtual content to be superimposed to a representation of a real 3D scene and complying with at least one scenario, and is relevant to mixed reality (MR).

The device 1 is advantageously an apparatus, or a physical part of an apparatus, designed, configured and/or adapted for performing the mentioned functions and produce the mentioned effects or results. In alternative implementations, the device 1 is embodied as a set of apparatus or physical parts of apparatus, whether grouped in a same machine or in different, possibly remote, machines.

In what follows, the modules are to be understood as functional entities rather than material, physically distinct, components. They can consequently be embodied either as grouped together in a same tangible and concrete component, or distributed into several such components. Also, each of those modules is possibly itself shared between at least two physical components. In addition, the modules are implemented in hardware, software, firmware, or any mixed form thereof as well. They are preferably embodied within at least one processor of the device 1.

The device 1 comprises a module 11 for analyzing real-world information 22 retrieved e.g. from a camera capture (which can rely on a depth camera) of a real 3D scene, a module 12 for analyzing and checking requirements of MR scenario schemes (virtual applications 23) with respect to the analyzed real-world information 22, a module 13 for selecting for each of the MR scenario schemes an associated animation in function of the analysis of module 12, and a module 14 for executing the scenario as applied to a virtually adapted 3D scene resulting from that adaptation.

The selection of the animations by the module 13 is based on a matching between intensities of CG effects of the considered animations and appropriate parameters extracted from the real-world information.

Information can be entered and retrieved by a user via a user interface 20 interacting with the device 1. The user interface 20 includes any means appropriate for entering or retrieving data, information or instructions, notably visual, tactile and/or audio capacities that can encompass any or several of the following means as well known by a person skilled in the art: a screen, a keyboard, a trackball, a touchpad, a touchscreen, a loudspeaker, a voice recognition system.

The device 1 is also adapted to be provided with virtual tools 21 from storage resources 10, dedicated to carrying out the animation selection. Those storage resources 10 can be available from any kind of appropriate storage means, which can be notably a RAM or an EEPROM (Electrically-Erasable Programmable Read-Only Memory) such as a Flash memory, possibly within an SSD (Solid-State Disk).

A functioning of the device 1 is detailed below.

### 5.1 Pre-requisite: scenario definition

In an initial step, an MR application creator defines a scenario. He specifies notably real elements involved in the scenario and how virtual elements interact with them. Examples of successive scenario elements are as follows:
- while a spaceship is shown on TV, an astronaut falls from the TV screen;
- the astronaut walks on a table on which the TV is placed;
- the astronaut plants a flag in the table;
- an airlock is thrown from the spaceship displayed on TV onto the table, in front of the astronaut;
- the astronaut leaves the scene using the airlock.

In fact, those actions as semantically defined above can be executed in different ways involving various possible refinements in the representations as well as various levels of animations. They define a scenario scheme, for which two or more animations are predefined by the application creator. The animations may differ in e.g. the movements made by the astronaut, the size of the animated flag, the distance covered by the astronaut before his flag being planted and the distance of the airlock to the planted flag, covered by the astronaut after planting the flag and before disappearing in the airlock. In addition, the scenario can include the falling of small spaceship debris onto the table and the floor, those debris having a density and/or granularity that differs in function of the environment.

An occupancy volume of each animation is advantageously predetermined during authoring, which does not depend on the environment. That volume is referred to as corresponding to a scale 1.

The animations for the same scenario scheme are preferably ordered in function of the intensity of their effects. Namely, for each environmental parameter associated with an effect and for each animation parameter (such as scale, granularity, behavior animation, path angle of trajectory, length of trajectory), the author sets the range of variations and therefore the intensity of the effect.

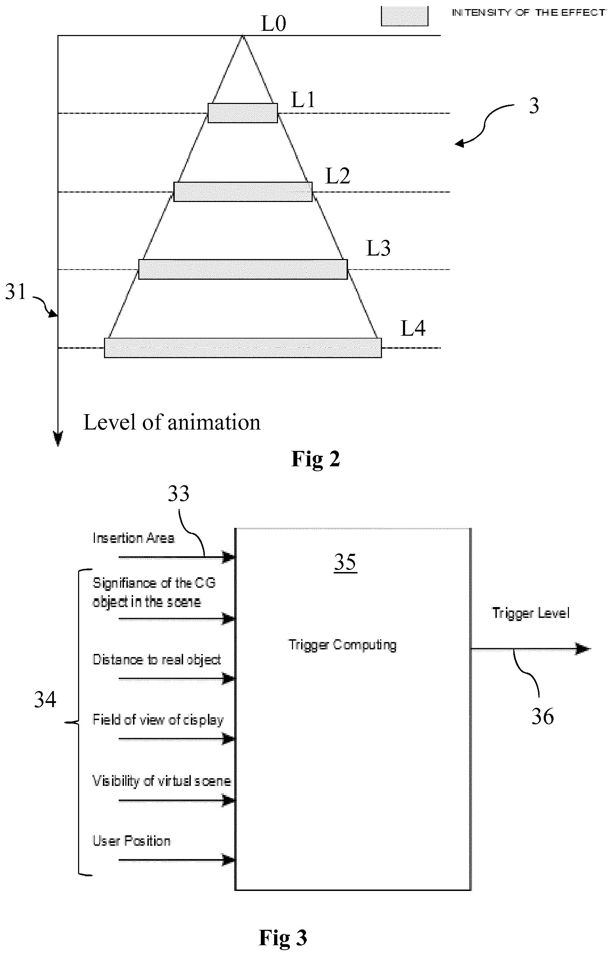

As illustrated on **Figure 2**, five (5) levels L0, L1, L2, L3 and L4 are e.g. hierarchically defined for a CG object in function of a level of animation 31, starting from no animation at all at level L0 to a maximum intensity of CG effects (full animation) at level L4.

The author further classifies each CG object of the virtual scene in function of its relative importance (for example from the most to the least important).

In the example above with the astronaut, instead of considering the CG contents as representing a unique scenario scheme, the astronaut, the flag and the airlock can be treated as separate and interacting virtual objects. Then, the actions corresponding to each of those virtual objects can be processed as related to an individual scenario scheme. For example, the astronaut is then ranked as the most important, followed by the airlock and finally the flag.

It should be noted that where CG contents are interdependent, as in the above example, fallback scenario schemes are preferably designed for each of those CG contents in case any of the others is not activated. Of course, depending on the specific situations and on the possible achievements, those fallback scenarios may concern only some of those CG contents, and anticipate the absence of only some of the other CG contents.

Coming back to the above example with the astronaut, the full scenario scheme regarding the astronaut may be replaced:
- in the absence of the flag, with a first reduced scenario scheme in which the astronaut does not plant any flag;
- in the absence of the airlock, with a second reduced scenario scheme in which the astronaut stays close to the flag and disappears by jumping on the table (the ground);
- in the absence of both the flag and the airlock, with a third reduced scenario in which the astronaut does not plant any flag and disappears by jumping on the table.

Likewise, the full scenario schemes regarding the airlock and flag may be replaced in the absence of the astronaut with fallback reduced scenarios in which the flag is thrown from the TV spaceship and is planted onto the table, the airlock is thrown from the TV spaceship onto the table just in front of the flag, and the flag disappears into the airlock.

Only targeted fallback scenarios need to be prepared upstream. For instance, no reduced scenario is planned for the flag where the astronaut is absent as well as the airlock.

The definition of the CG contents is flexible and depends on authoring as well as implementation considerations. For example, instead of considering the astronaut, the flag and the airlock as three distinct virtual contents complying respectively with three distinct scenario schemes, it is possible to treat them as a unique virtual content. In this case, a scenario scheme may possibly be considered at a more abstract and general layer than above, and may consist merely in the following:
- while a spaceship is shown on TV, an astronaut falls from the TV screen;
- the astronaut walks on a table on which the TV is standing;
- the astronaut disappears from the scene.

The different animation levels corresponding to that scenario scheme would then include the presence of the flag and/or airlock and the related effects.

### 5.2 Environment scan and specificities determination

A next step consists of an environment scan and the determination of related specificities. It is directed to establishing an environment description by detecting and labeling the environment specificities such as notably the objects present in the environment (e.g. a table, a glass lying on the table, a plant) and the free planar areas.

Accordingly, the user scans his environment, which can be achieved notably with a device equipped with a depth sensor such as a product commercialized under the name "Intel Real Sense", which provides a point cloud of the scanned scene.

The point cloud is then analyzed to detect and label the environment characteristics. Technical solutions for achieving that task are described in particular in the articles "Real-Time Plane Segmentation using RGB-D Cameras", by Dirk Holz, Stefan Holzer, Rady Bogdan Rusu and Sven Behnke in Proceedings of the 15th RoboCup International Symposium, Istanbul, July 2011; "Real-time 3D segmentation of cluttered scenes for robot grasping", by André Uckermann, Robert Haschke and Helge J. Ritter in Humanoids 2012, pp. 198-203; "Segment and Label Indoor Scene Based on RGB-D for the Visually Impaired", by Zhe Whang, Hong Liu, Xiangdong Wang and Yueliang Qian in MultiMedia Modeling 2014, pp. 449-460; and "Three-dimensional point cloud plane segmentation in both structured and unstructured environments", by J. Xiao, J. Zhang, B. Adler, H. Zhang and J. Zhang in Robotics and Autonomous Systems 2013, 61(12), pp. 1641-1652.

The analysis of the environment can also be achieved with a device such as commercialized under the name Microsoft HoloLens, which outputs a 3D mesh. Some solutions enabling to retrieve environment characteristics from such a 3D mesh include those described in the articles "Mesh Based Semantic Modelling for Indoor and Outdoor Scenes", by Julien P. C. Valentin, Sunando Sengupta, Jonathan Warrel, Ali Shahrokni and Philip H. S. Torr in CVPR 2013*;* and "A survey on Mesh Segmentation Techniques", by Ariel Shamir in Computer Graphics forum, vol. 27, 2008, n. 6, pp. 1539-1556.

The module 11 for analyzing real-world information, in charge of this step, can either be embedded in the device used to scan the scene or run on a server.

### 5.3 Animation selection

At the present level, the description of the environment is known. The present step consists in analyzing the various environment descriptions (known from module 11) combined with the scenario requirements (known from module 12) to determine the suited animations among the possibilities offered for each scenario scheme, as carried out by module 13.

Since insertion areas are identified for inserting virtual scenes, a trigger level is advantageously computed to achieve a best possible rendering.

As illustrated on **Figure 3**, in addition to the insertion areas 33, several computed complementary parameters 34 are preferably considered. They involve the real 3D scene, and include for each CG content at least one of:
- a distance of the CG content to a user,
- a significance of the CG content in the MR scene,
- a position of the CG content with respect to a field of view of a display,
- a distance of the CG content to a real object,
- a visibility of the CG content.

From the considered parameters 33 and 34, trigger computing operations 35 (module 13) produce a trigger level 36 corresponding to the selected animation level.

In case several animations have a same intensity of CG effects for a given scenario scheme, that selection further includes the determination of an appropriate item among those animations. This can be based on other criteria, such as notably directed to a representation refinement level. In alternative or combined implementations, the animation selection at a given animation level is at least partly based on a random process.

If the allocated insertion areas are not sufficient for all effects attached to CG objects even with a minimum animation level, some CG contents can be turned down. In this respect, a hierarchical ranking of the CG contents is preferably exploited.

Also, where effects are interdependent, the inactivation of one CG content determines the behavior of another CG content, as previously described.

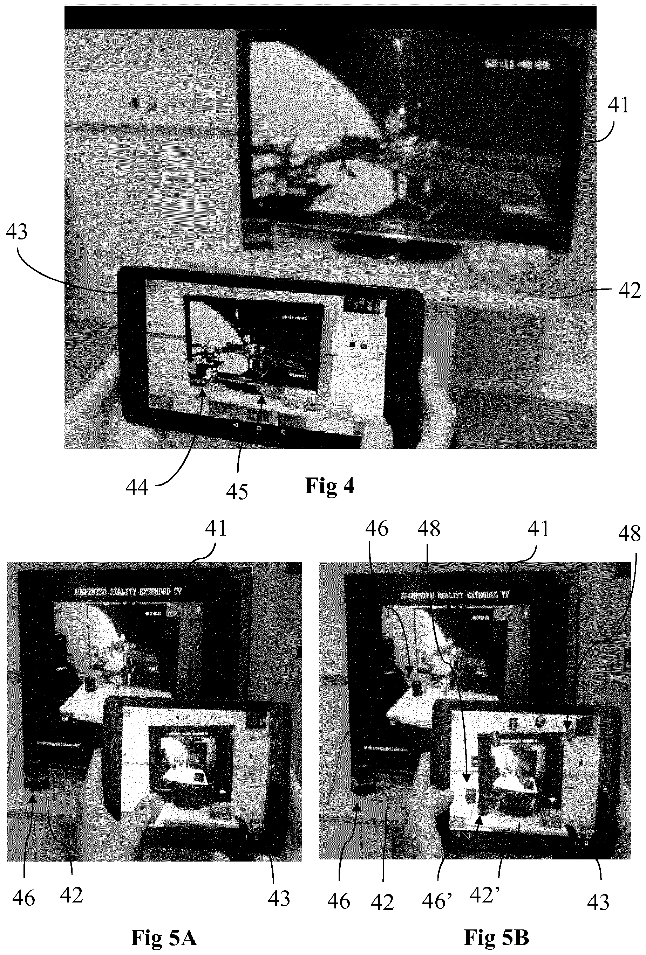

Two practical examples are illustrated on the photos of **Figures 4, 5A and 5B**. In both applications, a movie is broadcast on a TV set 41 placed on a table 42, which is visualized on a screen of a tablet 43.

A first MR application (**Figure 4**) corresponds to the example developed above with a virtual astronaut 44 and a virtual airlock 45. The virtual astronaut 44 having jumped from a spaceship (really) displayed on the TV screen is walking on the table 42, planting a virtual flag and leaving the scene using the virtual airlock 45.

A second MR application (**Figures 5A and 5B**) is built around a cube 46 lying on the table 42 close to the TV set 41. The user presses the image 46' of that cube 46 as seen on the tablet display (Figure 5A), which entails the generation of multiple virtual cube clones 48 falling on the representation of the real scene and bouncing on the representation 42' of the table 42 on the tablet screen (**Figure 5B**).

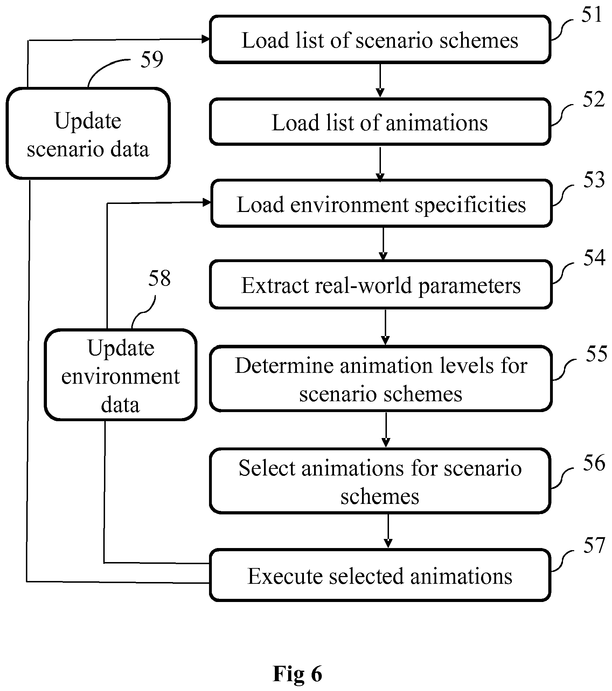

In execution, as illustrated on **Figure 6**, the device 1 proceeds preferably as follows in an MR operation. In acquisition stages, lists of scenario schemes (step 51) and associated animations (step 52) are loaded as well as specificities of the real 3D environment (step 53). Parameters are then extracted from the real-world specificities (step 54). On the ground of those pieces of information, animation levels are determined for the scenario schemes (step 55) and hence the animations to be executed (step 56). The selected animations are finally executed during rendering (step 57).

The process is reiterated through updating real environment data (step 58) and possibly also scenario data (step 59).

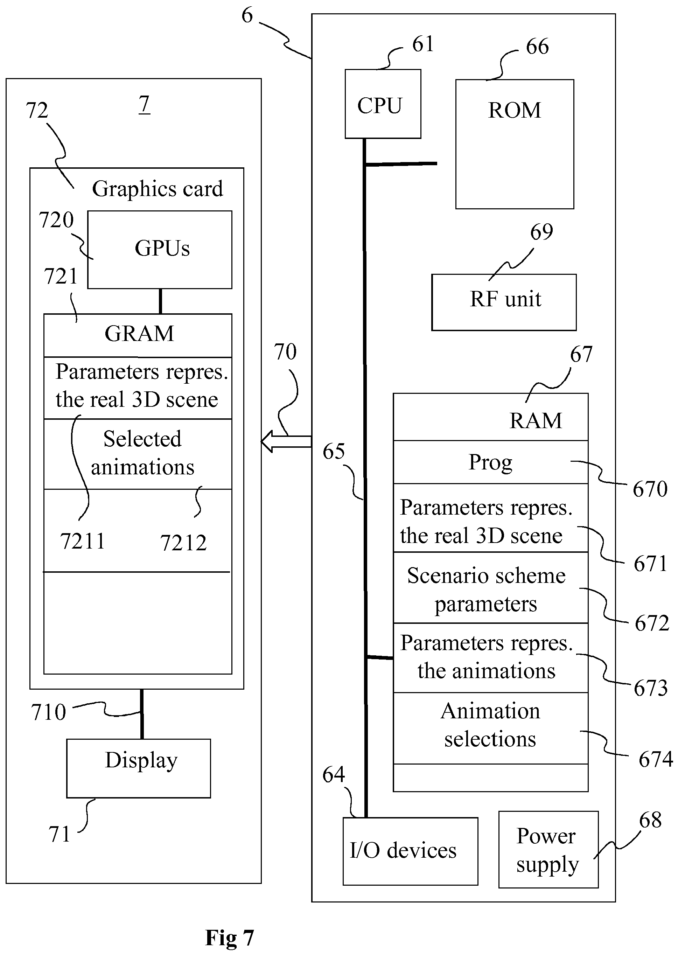

A particular virtual content generation apparatus 6, visible on **Figure 7**, is embodying the device 1 described above and is coupled with an MR visualization apparatus 7 via a communication link 70. The latter is adapted to the transmission of information on virtual contents from the apparatus 6 to the apparatus 7, with a view to a representation of those contents by the apparatus 7.

The MR visualization apparatus 7 corresponds for example to a tablet, a smartphone, a head-mounted display (HMD), a games console - such as a specialized games console producing and displaying images live, or a laptop. It is suited to augmented reality, whether for direct view (the user is typically viewing the real 3D scene through a glass) or for indirect view (the user is viewing the real 3D scene displayed on a screen). Both capacities can also be combined.

In particular implementations, the apparatus 6 and 7 are separate and possibly remote, the apparatus 6 being for example a server. The communication link 70 is then made of a wired or a wireless transmission. Advantageously, that transmission is adapted to streaming the virtual contents to the MR visualization apparatus 7.

According to variant implementations, the entities 6 and 7 are integrated parts of a same apparatus, which can be one of the above-cited examples for the apparatus 7. The communication link 70 consists then preferably in an internal communication bus.

The virtual content generation apparatus 6 comprises the following elements, connected to each other by a bus 65 of addresses and data that also transports a clock signal:
- a microprocessor 61 (or CPU) ;
- a non-volatile memory of ROM type 66;
- a RAM 67;
- one or several I/O (Input/Output) devices 64 such as for example a keyboard, a mouse, a joystick, a webcam; other modes for introduction of commands such as for example vocal recognition are also possible;
- a power source 68 ; and
- a radiofrequency unit 69 (which in some embodiments is providing the communication link 70).

According to a variant, the power supply is external to the apparatus 1.

The MR visualization apparatus 7 comprises the following elements:
- a graphics card 72 comprising several Graphical Processor Units (or GPUs) 720 and a Graphical Random Access Memory (GRAM) 721;
- a display device 71 of display screen type directly connected to the graphics card 72 to display synthesized images calculated and composed in the graphics card, for example live;
- a dedicated bus 710 connecting the display device 73 to the graphics card 72 (enabling high data transmission bitrates and thus reduced latency time for the display of images composed by the graphics card).

In an alternative implementation, the display device 73 corresponds to a glass through which the user is seeing the real environment, and the apparatus 7 further comprises an optical projection system (not represented), which enables to project e.g. generated virtual images or contents on the glass.

It is noted that the word "register" used in the description of memories 66, and 67 (for apparatus 6) and 721 (for apparatus 7) designates in each of the memories mentioned, both a memory zone of low capacity (some binary data) as well as a memory zone of large capacity (enabling a whole program to be stored or all or part of the data representative of data calculated or to be displayed). Also, the registers represented for GRAM 721 can be arranged and constituted in any manner, and each of them does not necessarily correspond to adjacent memory locations and can be distributed otherwise (which covers notably the situation in which one register includes several smaller registers).

When switched-on, the microprocessor 61 loads and executes the instructions of the program contained in the RAM 67.

The random access memory 67 comprises notably:
- in a register 670, the operating program of the microprocessor 61 responsible for switching on the apparatus 6,
- in a register 671, parameters representative of the real 3D scene (for example models of the object(s) of the scene and lighting parameters);
- in a register 672, parameters representative of one or more MR scenario schemes;
- in a register 673, parameters representative of animations, associated with the MR scenario schemes;
- in a register 674, parameters on animation selections. When switched on and once the parameters 671, 672, 673 and 674 are loaded into the RAM 67, the graphic processors 720 of graphics card 72 are provided with representation data into the GRAM 721 and execute representation instructions in the form of microprograms of "shader" type using HLSL (High Level Shader Language) language or GLSL (OpenGL Shading Language) for example.

The random access memory GRAM 721 comprises notably:
- in a register 7211, the parameters representative of the real 3D scene;
- in a register 7212, the parameters representative of the selected animations corresponding to the MR scenario schemes.

As will be understood by a skilled person, the presence of the graphics card 72 is not mandatory, and can be replaced with simpler visualization implementations.

On the ground of the present disclosure and of the detailed embodiments, other implementations are possible and within the reach of a person skilled in the art without departing from the scope of the invention. Specified elements can notably be interchanged or associated in any manner remaining within the frame of the present disclosure. Also, elements of different implementations may be combined, supplemented, modified, or removed to produce other implementations. All those possibilities are contemplated by the present disclosure.

## Claims

1. A device (1, 6) for generating at least one dynamic virtual content to be superimposed to a representation of a real 3D scene, said at least one dynamic virtual content complying with at least one scenario scheme defined before a runtime of said at least one scenario scheme, said device comprising:
- at least one input adapted to receive real-world information (22) captured in said real 3D scene and
- at least one processor configured for executing said at least one scenario scheme at said runtime in function of said real-world information, **characterized in that** said device is adapted to obtain at least two animations defined before said runtime of said at least one scenario scheme, said animations being associated with one of said at least one scenario scheme and having at least two respective animation levels (L1, L2, L3, L4), and said at least one processor is further configured:
- for selecting (13) one of said at least two animations in function of at least one parameter extracted from said real-world information and corresponding to the animation level of said selected animation and
- for executing (14) said selected animation at said runtime as said one of said at least one scenario scheme.

2. A device (1, 6) according to claim 1, **characterized in that** said at least one scenario scheme includes a movement of a virtual object (44) along a trajectory, and said at least two animations include at least one of respectively distinct path angles of said trajectory and respectively distinct lengths of said trajectory.

3. A device (1, 6) according to claim 1 or 2, **characterized in that** said at least one scenario scheme includes a kind of behavior of at least one virtual object (44, 45) and said at least two animations include respectively distinct achievements of said kind of behavior.

4. A device (1, 6) according to any of the preceding claims, **characterized in that** said at least one scenario scheme includes at least one of a generation, a transformation, and a movement of at least two virtual objects (48), and said at least two animations include respectively distinct numbers of said at least two virtual objects.

5. A device (1, 6) according to any of the preceding claims, **characterized in that** said at least one parameter extracted from said real-world information includes data about available space (33) in said real 3D scene.

6. A device (1, 6) according to claim 5, **characterized in that** said data about available space in said real 3D scene include data on at least two candidate insertion areas (33) predetermined before said runtime.

7. A device (1, 6) according to any of the preceding claims, **characterized in that** said at least one scenario scheme involving a representation of at least one virtual object in said representation of said real 3D scene, said at least one parameter (34) extracted from said real-world information includes data about a relationship of said at least one virtual object with a user.

8. A device (1, 6) according to claim 7, **characterized in that** said relationship of said at least one virtual object with said user includes at least one of a distance of said at least one virtual object to said user and a visibility of said at least one virtual object to said user.

9. A device (1, 6) according to any of the preceding claims, **characterized in that** said at least one scenario scheme involving a representation of at least one virtual object in said representation of said real 3D scene, said at least one parameter (34) extracted from said real-world information includes data about a relationship of said at least one virtual object with said real 3D scene.

10. A device (1, 6) according to claim 9, **characterized in that** said relationship of said at least one virtual object with said real 3D scene includes at least one of a position of said at least one virtual object with respect to a field of view of a display, a represented distance of said at least one virtual object to at least one real object, and an importance of said at least one virtual object with respect to said real 3D scene.

11. A device (1, 6) according to any of the preceding claims, **characterized in that** said device being adapted to generate at least two of said at least one dynamic virtual content complying respectively with at least two of said at least one scenario scheme, and said at least two dynamic virtual contents (44, 45) being ranked in an order of importance before said runtime of said at least two scenario schemes, said at least one processor is configured for selecting said animations associated respectively with said at least two scenario schemes in function of said order of importance.

12. A device (1, 6) according to claim 11, **characterized in that** if said at least two dynamic virtual contents cannot be generated jointly, at least one of said virtual contents being ranked at a lower order of importance than at least one other of said virtual contents is not generated.

13. An apparatus chosen among a mobile phone, a tablet and an augmented reality or mixed reality head-mounted display, **characterized in that** said apparatus comprises a device according to any of claims 1 to 12.

14. A method for generating at least one dynamic virtual content to be superimposed to a representation of a real 3D scene, said at least one dynamic virtual content complying with at least one scenario scheme defined before a runtime of said at least one scenario scheme, said method comprising:
- receiving (53) real-world information captured in said real 3D scene and
- executing (57) said at least one scenario scheme at said runtime in function of said real-world information,
**characterized in that** said method further comprises:
- obtaining (52) at least two animations defined before said runtime of said at least one scenario scheme, said animations being associated with one of said at least one scenario scheme and having at least two respective animation levels,
- selecting (55, 56) one of said at least two animations in function of at least one parameter extracted from said real-world information and corresponding to the animation level of said selected animation and
- executing (57) said selected animation at said runtime as said one of said at least one scenario scheme.

15. A method according to claim 14, **characterized in that** said method is executed by a device (1, 6) according to any of claims 1 to 12.

16. A computer program for generating at least one dynamic virtual content, comprising software code adapted to perform a method compliant with claim 14 or 15 when the program is executed by a processor.
